(19) Europäisches Patentamt
European Patent Office
Office européen des brevets

(11) **EP 3 957 392 A1**

(12) **EUROPEAN PATENT APPLICATION**
published in accordance with Art. 153(4) EPC

(43) Date of publication:
**23.02.2022  Bulletin 2022/08**

(21) Application number: **19925247.9**

(22) Date of filing: **22.08.2019**

(51) International Patent Classification (IPC):
**B01F 7/16** (2006.01)        **B01F 7/24** (2006.01)

(52) Cooperative Patent Classification (CPC):
**B01F 25/40; B01F 27/60; B01F 27/72; B01F 27/73; B01F 27/80; B01F 27/91; B01F 27/92**

(86) International application number:
**PCT/JP2019/032869**

(87) International publication number:
**WO 2020/213184 (22.10.2020 Gazette 2020/43)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **15.04.2019  PCT/JP2019/016233**
          **27.05.2019  PCT/JP2019/020976**

(71) Applicant: **M. Technique Co., Ltd.**
**Izumi-shi, Osaka 594-1144 (JP)**

(72) Inventor: **ENOMURA Masakazu**
**Izumi-shi, Osaka 594-1144 (JP)**

(74) Representative: **Carpmael, Robert Maurice Charles**
**Marks & Clerk LLP**
**15 Fetter Lane**
**London EC4A 1BW (GB)**

(54) **AGITATOR**

(57) Provided is an agitator that is capable of more efficiently applying a shear force to a treatment target fluid through the action of an intermittent jet flow. The agitator comprises a rotor 2 which includes blade 12, and a screen 9 concentric therewith, the rotation of at least the rotor 2 causing a treatment target fluid to pass through slits 18 in the screen 9 to become an intermittent get stream, which is discharged from inside the screen to the outside thereof, wherein the agitator is characterized in that: the screen 9 has a cylindrical shape with a circular cross section; openings of the slits 18 provided in an inner surface of the screen 9 constitute flow intake openings 33; openings of the slits 18 provided in an outer surface of the screen 9 constitute flow discharge openings 34; spaces between the flow intake openings 33 and the flow discharge openings 34 constitute slit space 35; and the circumferential- directional width (So) of the flow discharge openings and the circumferential- directional width (Si) of the flow intake openings 33 are greater than the circumferential- directional width (Sm) of the slit spaces 35.

FIG. 6

**Description**

Technical Field

The present invention relates to improvement of a stirrer, especially a stirrer to be used for emulsification, dispersion, or mixing of a fluid to be processed.

Background Art

Various stirrers have been proposed as an apparatus to carry out processing of emulsification, dispersion, or mixing of a fluid, however, today, it is required that the stirrer can satisfactorily process a fluid to be processed containing a substance having a small particle diameter such as nanoparticle.

For example, a bead mill and a homogenizer are known as a kind of widely known stirrer, emulsifier, and disperser.

There is a problem in the bead mill, however, that a crystal state in surface of particle is destructed and damaged thereby decreasing in a performance thereof.

In addition, there is a big problem of generation of foreign materials as well as a high-cost problem of the beads which are frequently replaced or fed.

In a high-pressure homogenizer, problems such as unstable operation of the machine as well as a large power requirement have not been solved yet.

A rotary-type homogenizer has been conventionally used as a preliminary mixer; but, in order to carry out nano-dispersion or nano-emulsification, a finishing machine is required to further finish the particles to a nanometer size.

With Regard to Patent Documents

In light of these circumstances, the inventor of the present application has proposed the stirrer described in Patent Documents 1 to 4. This stirrer provides a rotor having a plurality of blades and a screen being arranged around the rotor and having a plurality of slits. By rotating the rotor and screen relative to each other, the fluid to be processed is sheared in a minute space between inner wall of the screen including slits and blades, and the fluid to be processed is discharged from inside the screen to outside as an intermittent jet flow through the slits.

In the stirrer described in Patent Documents 1 to 3, as described in "Conventional Technology" in Patent Document 2, the stirring condition thereof was changed by adjusting rotation number of an impeller (namely rotor). The invention according to Patent Document 2 proposes the stirrer in which a width of clearance between a blade tip of the rotor and the inner wall of the screen could be arbitrarily chosen; by so doing, it was intended to improve and optimize the ability according to a fluid. In Patent Document 3, it was found that the effect of atomization is rapidly increased by increasing the frequency Z (kHz) of the intermittent jet flow more than certain values; and based on this finding, it has been proposed to provide a stirrer capable of forming microparticle in a region where could not be achieved by a conventional stirrer.

In any of Patent Documents 1 to 3, width of the blade tip of the rotor in a circumferential direction and width of the slit provided on the screen in the circumferential direction are under certain constant condition (specifically, under the condition in which the both widths are almost identical, or the width of the blade tip of the rotor is fixed in the state of slightly larger than the width of the slits), the invention was attained by changing the clearance to the inner wall of the screen or changing the frequency Z (kHz) of the intermittent jet flow.

Through the development by the applicant of the present invention up to date, it has been known that process of emulsification, dispersion, or mixing is performed by generation of liquid-liquid shear force in speed interface due to the intermittent jet flow and, it is presumed that this liquid-liquid shear force works effectively to realize miniaturization of fluid to be processed, especially, extremely fine dispersion or emulsification such as nano-dispersion or nano-emulsification; but at present, the action thereof has not been fully clarified yet.

Outline of Development of the Present Invention

The inventor of the present invention has attempted to realize further fine dispersion or emulsification by facilitating miniaturization of a fluid to be processed by using the apparatus described in Patent Documents 1 to 3; however, from the point that the fluid to be processed is sheared in the minute space between the inner wall of the screen including slits and the blades, since it is considered that it is effective to increase the number of shearing per unit times to improve the efficiency of shearing, thus, the study was carried out from a viewpoint how to increase the number of the shearing per unit time.

As a means for achieving this, it is known to change the rotation number of the rotor (rotational peripheral velocity of the tip of the blade) as described in these Patent Documents. Under the condition that the rotation number of the rotor (rotational peripheral velocity of the tip of the blade) is constant, it is considered that either of increasing the number of the slit by narrowing the width of the slit, increasing the number of the blade of the rotor or both is effective.

However, in the case of generating the intermittent jet flow, when the width of the slit is made too wide, a pressure of the fluid to be processed passing through the slit decreases whereby the flow velocity of the intermittent jet flow becomes slower; on the other hand, when the width of the slit is made narrow, flow velocity of the intermittent jet flow becomes faster. However, when the width of the slit is made too narrow, pressure loss increases and a flow amount of the fluid to be processed passing thorough the slit decreases, so that the intermittent jet flow cannot be satisfactorily generated. As the result, there has been a limitation to increase the number of the slit by narrowing the width of the slit.

In addition, when the number of the slit is increased by narrowing the width of the slit, cavitation is significantly generated, and cavitation phenomenon is induced. The cavitation takes process of initial generation, growth, and bubble collapse due to increase of a pressure. When the bubbles collapse, erosion occurs with energy of several thousand atmospheric pressure. This erosion is a major cause of machine damage, and the suppression of cavitation is a very important factor.

Unfortunately, with the current flow analysis simulation technology, it is impossible to carry out accurate cavitation analysis.

In addition, processing ability of the stirrer can be improved by further increasing the rotation number of the rotor. By increasing the rotation number of the rotor, the discharge flow velocity of the fluid to be processed discharged from the inside of the screen to outside through the silt is increased thereby increasing the speed of the intermittent jet flow. In this case, the following points become problem. The speed of sound is about 340 m/second in air at room temperature and about 1500 m/second in water; and when bubbles are mixed due to the cavitation, the speed of sound in water is significantly decreased.

The speed of sound in water including bubbles with void ratio of 0.2 is 30 m/second or less; and the speed of sound in water with void ratio of 0.4 is about 20 m/second. In Patent Documents 1 to 3, it is considered that the speed of the intermittent jet flow passing through the screen is close to the speed of sound in water including the bubbles as mentioned above; and thus, when the speed of the intermittent jet flow exceeds the speed of sound, shock wave is generated to cause a damage to machine. Therefore, it is necessary to suppress the generation of the bubbles due to the cavitation as much as possible to solve the problem of the shock wave.

Accordingly, not only increasing the number of shearing per a unit time, but also focusing on the liquid-liquid shear force due to the intermittent jet flow; and then, by improving the shear force, it is studied to promote the miniaturization of the fluid to be processed and to suppress the generation of the cavitation.

A generation mechanism of the liquid-liquid shear force due to the intermittent jet flow will be explained. When a blade rotationally moves by rotation of a rotor, a pressure of the fluid to be processed increases in the front side of the blade in a rotation direction. Because of this, the fluid to be processed is discharged as the intermittent jet flow from a slit located in the front side of the blade. As a result, the liquid-liquid shear force is generated between the fluid to be processed outside a screen and the fluid to be processed being discharged as the intermittent jet flow. In addition, since the jet flow is intermittent, entrained flow is less likely to occur and which is more effective. Therefore, by increasing the flow velocity of the intermittent jet flow to be discharged, the liquid-liquid shear force can be enhanced; but there is a mechanical limitation in increasing the rotation number of the rotor.

In addition, on the rear surface side of the blade in the rotation direction, due to the decrease in the pressure of the fluid to be processed, a phenomenon occurs in which the fluid to be processed is sucked from the slit located in the rear surface side. As a result, on the outside of the screen, the intermittent jet flow of the fluid to be processed from the slit is not discharged relative to the fluid to be processed that is simply stand still, but the forward and reverse flows (discharge and suction) are generated; and thus, it is considered that due to the relative velocity difference in the interface of the both flows, the liquid-liquid shear force is generated between the unsteady fluids to be processed, as such, a water hammering action is generated because the forward and the reverse flow (discharged and suction) are not steady flows but unsteady flows. Due to the effect of this water hammering action, a collision pressure is dramatically increased as compared with the steady flow, so that a further greater shear force is generated thereby increasing processing ability.

In Patent Document 4, focusing on the liquid-liquid shear force due to the intermittent jet flow, by defining the relationship between the width of blade tip of the rotor and the width of the slit of the screen, to increase the efficiency of the intermittent jet flow was attempted.

The mixing stirrer and the disperser proposed by Patent Documents 5 to 7, the function and composition thereof are different from those of the present invention in, so that the intermittent jet flow cannot be generated.

Prior art documents

Patent Document

Patent Document 1: Japanese Patent No. 2813673
Patent Document 2: Japanese Patent No. 3123556
Patent Document 3: Japanese Patent No. 5147091
Patent Document 4: International Patent Laid-Open Publication No. 2016/152895
Patent Document 5: Re-publication of PCT International Publication No. 2015-093209
Patent Document 6: Japanese Examined Utility Model Application Publication No. H05-15937
Patent Document 7: French Patent Laid-Open Publication No. 2679789

Disclosure of Invention

Problems to be Solved by the Invention

An object of the present invention is to provide a stirrer which can more efficiently perform shearing applied to a fluid to be processed by an action of an intermittent jet flow.
In addition, another object of the present invention is to provide a stirrer which can realize, as a result of efficient shearing, extremely fine dispersion and emulsification such as nano-dispersion and nano-emulsification.

Means for Solving the Problems

The present invention was achieved as a result of an attempt to improve the stirrer from a novel point of view to increase a relative velocity difference at an interface between forward flow and reverse flow (discharge and suction from a slit) of fluid to be processed caused by an intermittent jet flow. Specifically, by reviewing a cross-sectional shape of the slit provided in a screen, it could be realized to provide a stirrer capable of increasing relative velocity difference between the forward flow and the reverse flow of the fluid to be processed. Further, the inventor of the present invention reviewed the cross-sectional shape of the slit provided in the screen; and as a result, it was found that the relative velocity difference between the forward flow and the reverse flow of the fluid to be processed is increased while reducing a pressure loss of the fluid to be processed, thereby suppressing the cavitation, and the fluid to be processed which is discharged from the inside to the outside of the screen through the slit efficiently forms the intermittent jet flow, as well as the fluid to be processed is efficiently sucked from the outside of the screen into the inside thereof through the slit, thus the present invention was completed on the basis of these findings.
Therefore, the present invention is to improve a stirrer which comprises a rotor having a plurality of blades and rotating as well as a screen laid around the rotor, all of which are provided concentrically, the screen includes a plurality of slits in a circumferential direction thereof and a screen member located between the adjacent slits, and by rotating at least the rotor of the rotor and the screen, a fluid to be processed is discharged as an intermittent jet flow from the inside to the outside the screen through the slits.
The stirrer according to the present invention which comprises a rotor having a plurality of blades and rotating, a partition wall for the purpose of holding a discharge pressure of the rotor, and a screen laid around the rotor, all of which are provided concentrically; and the screen forms a cylindrical shape having a circular cross-section, an opening of the plurality of slits provided on an inner wall surface of the screen is made to serve as an inflow opening, and an opening of the plurality of slits provided on an outer wall surface of the screen is made to serve as an outflow opening, and a space between the inflow opening and the outflow opening is made to serve as a slit space; and a width (So) of the outflow opening in the circumferential direction and a width (Si) of the inflow opening in the circumferential direction is set so as to be larger than a width (Sm) of the slit space in the circumferential direction.
Further, the present invention can be implemented such that the plurality of the slits includes at least an inflow-side region where the fluid to be processed flows into the slit from an inner side of the screen and an outflow-side region where the fluid to be processed flows out from the slit to an outside of the screen, and the inflow-side region is defined by an inflow-side end surface in a front side and an inflow-side end surface in a rear side, which are arranged with a distance in a rotation direction of the plurality of the blades, and the outflow-side region is defined by an outflow-side end surface in the front side and an outflow-side end surface in the rear side, which are arranged with a distance in the rotation direction of the blades; and the width (Sm) of the slit space in the circumferential direction is a width of the narrowest narrow part of the slit space in the circumferential direction; and angle of at least one of the following (1) to (4) is in the range of 1 degree to 45 degrees: (1) an angle of the inflow-side end surface in the front side against a radius passing through a center of the narrow part in the circumferential direction; (2) an angle of the outflow-side end surface in the rear side against a radius passing through a center of the narrow part in the circumferential direction; (3) an angle of the inflow-side end surface in the rear side against a radius passing through a center of the narrow part in the circumferential direction; and (4) an angle of the outflow-side end surface in the front side against a radius passing through a center of the narrow part in the circumferential direction.

In addition, the present invention can be implemented such that the plurality of the slits is provided with an intermediate region formed between the inflow-side region and the outflow-side region, the intermediate region is defined by an intermediate end surface in the front side and an intermediate end surface in the rear side, which are arranged with a distance in the rotation direction of the plurality of the blades, and the intermediate end surface in the front side and the intermediate end surface in the rear side have a width in a radial direction.

In the present invention, "width in the circumferential direction" means a distance of a straight line in the circumferential direction. For example, the width (Si) of the inflow opening in the circumferential direction means the distance of the straight line connecting the intersection point of the inflow-side end surface in the front side with the inner wall surface of the slit member and the intersection point of the inflow-side end surface in the rear side with the inner wall surface of the slit member; and the width (So) of the outflow opening in the circumferential direction means the distance of the straight line connecting the intersection point of the outflow-side end surface in the front side with the outer wall surface of the slit member and the intersection point of the outflow-side end surface in the rear side with the outer wall surface of the slit member.

In order to obtain the expected effects of emulsification, dispersion, stirring, or mixing by the intermittent jet flow, it is a key point that the relative speed difference at the speed interface of the forward flow and the reverse flow (discharge from and suction to the slit) of the fluid to be processed caused by the intermittent jet flow is to be increased. To do this, either means of by increasing the speed of the intermittent jet flow, or by increasing the suction speed of the fluid to be processed that is sucked from the outside of the screen into the inside thereof thorough the slit, or by both of them is employed to increase the relative speed difference between the forward flow and the reverse flow (discharge and suction).

By making the cross-sectional shape of the slit provided in the screen to those proposed by the present invention, the pressure loss at the time of forming the jet flow is decreased as compared with the conventional type of the slit thereby increasing the speed of the jet flow, in addition, the suction speed of the fluid to be processed that is sucked from the outside of the screen into the inside thereof thorough the slit is increased as a result of decrease in the pressure loss at the time of suction. Because of this plus and minus effects, the relative speed difference between the forward flow and the reverse flow (discharge and suction) can be further increased.

The nozzle shape, i.e., the cross-sectional shape of the slit provided in the screen, has a significant influence on the formation of the jet flow.

The inventor of the present invention has repeated the experiment through trial and error. Then, by using the cross-sectional shapes of the slit provided in the screen proposed in the present invention, it was substantially most effective in increasing the relative speed difference between the forward flow and the reverse flow (discharge and suction) of the fluid to be processed. The region near the outflow opening of the slit provided in the screen is called a transition region; and a potential core is formed in the center part of the slit. The potential core is substantially determined by the width (Sm) of the slit space in the circumferential direction, which is the width of the narrowest narrow part in the circumferential direction in the width of the slit space in the circumferential direction. By the present invention, the speed difference is generated between the flow of the potential core and the flow around the potential core, and by increasing the relative speed difference at the speed interface thereof, a large liquid-liquid shear force can be obtained even in the outflow side region including the transition region.

In addition, it is preferable to carry out the present invention in such a way that the width (Sm) of the slit space in the circumferential direction is the width of the narrowest narrow part in the circumferential direction among the width of the slit space in the circumferential direction; and the width of the slit in the circumferential direction is gradually decreased from the inflow opening toward the narrow part and is gradually increased from the narrow part toward the outflow opening. The width of the slit in the circumferential direction may be arbitrarily changed as on condition that the intermittent jet flow is generated and the fluid to be processed is well sucked from the outside of the screen into the inside thereof through the slit, although the width (So) of the outflow opening in the circumferential direction is preferably in the range of 1.0 mm to 8.0 mm, the width (Sm) of the slit space in the circumferential direction is preferably in the range of 0.3 mm to 5.0 mm, and the width (Si) of the inflow opening in the circumferential direction is preferably in the range of 1.0 mm to 8.0 mm.

It is preferable that the screen be carried out so that the diameters of the blade and of the screen become smaller as they move away from an introduction port into which the fluid to be processed in an axis direction.

Considering the relationship between the slit and the introduction port in an axial direction, there is a tendency that a discharge amount from the slit nearer the introduction port is larger, on the other hand, the discharge amount from the slit apart from an introduction port is smaller. Therefore, the discharge amount in an axial direction of the screen can be made uniform by configuring such that the diameters of the blade and the screen are made smaller as they move apart from the introduction port in an axial direction. By so doing, generation of the cavitation can be suppressed; and thus, malfunction of the machine can be reduced.

The plurality of the slits has the same width in the circumferential direction and are formed at equal intervals in the circumferential direction, whereby the fluid to be processed can be processed under more uniform condition in the circumferential direction. However, this does not prevent the use of the plurality of the slits having different widths and does not prevent an embodiment as the distance between the plurality of the slits is uneven.

In the case that the screen is made not to rotate, in individual control, it is only necessary to consider the rotation number of the rotor, on the contrary, in the case that the screen is made to rotate in the opposite direction to the rotor, it can be suitable for extremely fine dispersion and emulsification such as nano-dispersion and nano-emulsification.

In addition, the present invention may be carried out in such a way that a width (v) of the plurality of the slits in the screen in the radial direction thereof is defined by the following formula (1), when D is a maximum outer diameter of the rotor.

$$0.02 \times D \leq v \leq 0.15 \times D \qquad (1)$$

Effect of The Invention

In the present invention, the intermittent jet flow has further studied; and as a result, a stirrer which can more efficiently perform shearing applied to the fluid to be processed by an action of the intermittent jet flow could be provided.

In addition, as a result of the efficient shearing, a stirrer that can be realized extremely fine dispersion and emulsification such as nano-dispersion and nano-emulsification could be provided.

In addition, a stirrer that can obtain particles having a narrow particle size distribution and uniform particle diameter could be provided.

Brief Explanation of Drawings

[FIG. 1] This is a front view illustrating use state in the stirrer according to one embodiment of the present invention.
[FIG. 2] This is an enlarged vertical transverse section of an essential part of the stirrer.
[FIG. 3] This is a front view illustrating a use state in the stirrer according to another embodiment of the present invention.
[FIG. 4] This is a front view illustrating a use state in the stirrer according to still another embodiment of the present invention.
[FIG. 5] This is a front view illustrating a use state in the stirrer according to further still another embodiment of the present invention.
[FIG. 6] This is an enlarged view of an essential part of the stirrer according to one embodiment of the present invention.
[FIG. 7] (A) to (E) are an enlarged view of the essential part of the stirrer according to another embodiment to which the present invention is applied, and (F) is an enlarged view of the essential part of the conventional stirrer.
[FIG. 8] (A) to (F) are an enlarged view of the essential part of the stirrer according to still another embodiment to which the present invention is applied.
[FIG. 9] FIG. 9 are explanatory drawings of test apparatuses of Examples and Comparative Examples of the present invention.

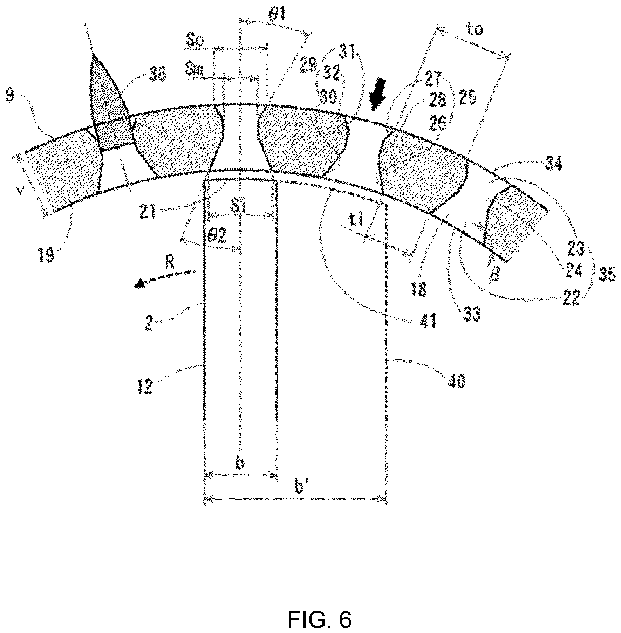

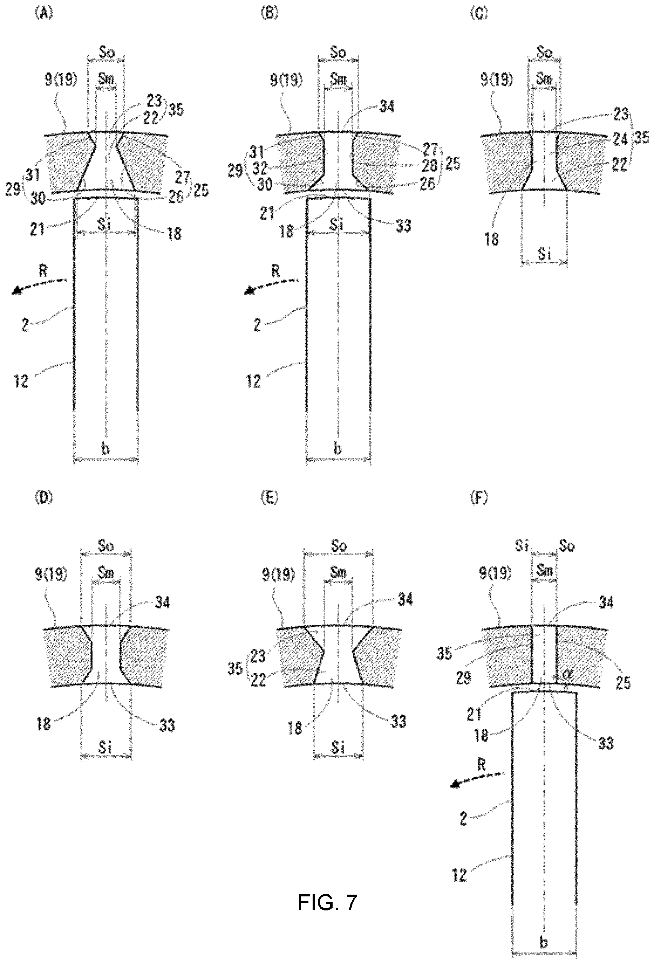

Hereinafter, embodiments according to the present invention will be explained with referring to the drawings. In FIG. 6 and FIG. 7, character "R" indicates a rotation direction.

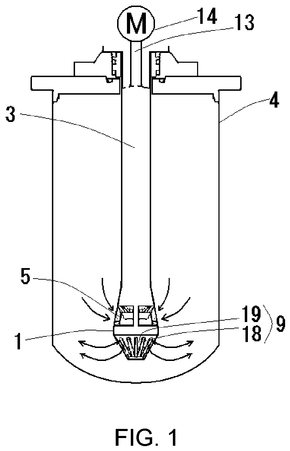

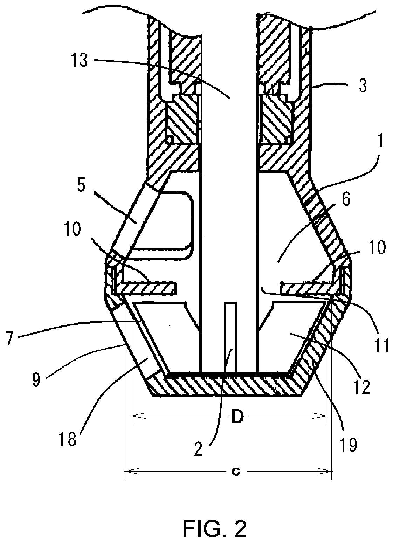

First, with referring to FIG. 1 and FIG. 2, a basic structure of an example of a stirrer to which the present invention can be applied will be explained.

The stirrer includes a processing member 1 that is arranged in a fluid to be processed, which is scheduled to be processed such as emulsification, dispersion, or mixing, and a rotor 2 that is arranged in the processing member 1.

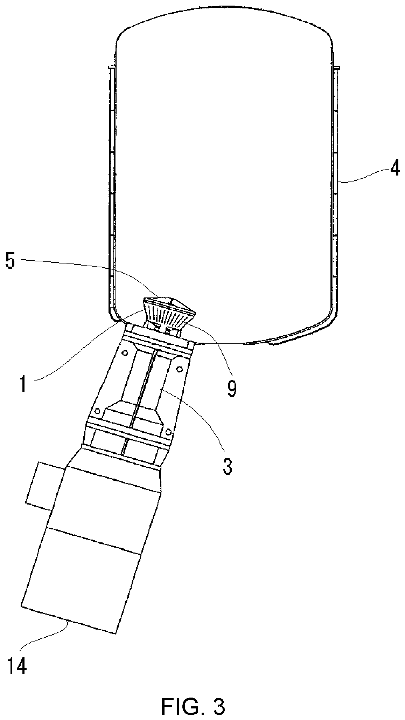

The processing member 1 is a hollow housing and, by being supported by a support tube 3, is arranged in a storing vessel 4 for storing the fluid to be processed, or a flow path of the fluid to be processed. In this example, the processing member 1 is arranged in a front-end of the support tube 3 and is inserted from an upper part of the storing vessel 4 to inside of lower part thereof, but the present invention is not restricted to the example. For example, as shown in Fig.3, it is also possible to carry out in which the processing member 1 may be supported by the support tube 3 so as to project upward from the bottom surface of the storing vessel 4.

The processing member 1 includes a suction room 6 having a suction part 5 to suck the fluid to be processed from the outside to the inside thereof, and a stirring room 7 conducting to the suction room 6. The outer circumference of the stirring room 7 is defined by a screen 9 having the plurality of slits 18.

In this specification, it will be explained that the screen 9 is composed of the slit 18 which is a void space and a screen member 19 which is an actual member located between the slit 18. Therefore, the screen 9 means an entirety that includes the slit 18 formed in the plurality of the screen members 19, and the screen member 19 means every and each actual member located between the slit 18 being adjacent. Similarly, an inner wall surface or an outer wall surface of the screen 9 means the entire inner wall surface or outer wall surface including the slit 18 formed in the plurality of the screen members 19. Further, the opening of the plurality of the slits 18 formed on the inner wall surface of the screen 9 is referred to as an inflow opening 33 and the opening of plurality of the slits 18 formed on the outer wall surface of the screen 9 is referred to as an outflow opening 34.

The suction room 6 and the stirring room 7 are partitioned by a partition wall 10 and are connected through an opening for introduction (introduction part) 11 that is provided in the partition wall 10. However, the suction room 6 is not essential; for example, without providing the suction room 6, the entire upper end of the stirring room 7 may be an opening for introduction whereby the fluid to be processed in the storing vessel 4 is introduced directly into the stirring room 7. The partition wall 10 is provided for the purpose to keep a pressure generated upon the fluid to be processed being discharged as the intermittent jet flow from the inside of the screen to the outside 9 through the slit 18.

The rotor 2 is a rotating body having the plurality of blades 12 in the circumferential direction, the rotor 2 and the screen 9 (in the case of the partition wall 10 being provided, then, the rotor 2, the screen 9 and the partition wall 10) are arranged coaxially, and they rotate while keeping a minute clearance between the blade 12 and the screen 9. To rotate the rotor 2, various rotation driving structures may be adapted; in this example, the rotor 2 is arranged at the tip of a rotation axis 13 and rotatably accommodated in the stirring room 7. More specifically, the rotation axis 13 is inserted into the support tube 3 and is further arranged so as to reach the stirring room 7 through the suction room 6 and the opening 11 of the partition wall 10; and the rotor 2 is attached to the tip thereof (lower end in the drawing). The rear end of the rotation axis 13 is connected to a rotation drive device such as a motor 14. It is preferable to use the motor 14 having a control system such as numeral control or being placed under a computer control.

In this stirrer, when the rotating blade 12 passes through the inner wall surface of the screen member 19 due to the rotation of the rotor 2, by a shear force applied to the fluid to be processed existed between them, emulsification, dispersion, or mixing is performed. At the same time, the rotation of the rotor 2 gives kinetic energy to the fluid to be processed, and the fluid to be processed passes through the slit 18 thereby further accelerated, and consequently the fluid to be processed is discharged from the stirring room 7 while forming the intermittent jet flow. Due to the intermittent jet flow, a liquid-liquid shear force is generated on interface velocity, thus processing of emulsification, dispersion, or mixing is performed.

The screen 9 has a cylindrical shape with a circular cross-section. With regard to the screen 9, it is preferable that, for example, the diameter thereof be gradually smaller as it is farther from the introduction opening 11 in axial direction (in the example of FIG. 2, toward a downward direction), like a cone shape of the surface shape. The diameter thereof may also be constant in an axial direction, but in that case, the discharge amount from the slit 18 is large near the introduction part 11 (upper part in FIG. 2); on the contrary, the discharge amount is small in a place apart from the introduction part 11 (lower part in FIG. 2). As a result, since there is a case that uncontrollable cavitation may occur which causes the risks to lead the malfunction of a machine, therefore, as shown in FIG. 1 and FIG. 2, the screen 9 is preferably the cone shape of the surface shape.

It is shown that the slit 18 extends linearly in the axial direction of the rotation axis 13 (upward and downward directions in the drawings) but may be curved and extended such as spiral shape. Further, although the plurality of the slits 18 are formed at the equal distance in the circumferential direction, they may be formed at different distances, and this does not prevent provision of the slit 18 having a plurality of shapes or sizes.

The slit 18 can be implemented by arbitrarily changing the lead angle thereof. As shown in the drawing, in addition to that the lead angle formed by the plane which is perpendicular to the rotation axis 13 and the extending direction of the slit 18 is 90 degrees, namely, linearly extending to vertical direction, it may be curved and extended in the vertical direction, such as spiral shape having a predetermined lead angle.

The blade 12 of the rotor 2 can be made so as to be linearly extended with a constant width radially from a center of the rotor 2 in a transverse section (cross section which is perpendicular to the axial direction of the rotation axis 13), or may be gradually increased in the width thereof toward the outside direction or gradually decreased in the width thereof toward the outside direction, or may be extended to the outside direction with being curved.

Further, in these blades 12, a lead angle of a front-end part 21 thereof can be arbitrarily changed. For example, the lead angle formed by the plane orthogonal to the rotation axis 13 and the extending direction of the front-end part 21 extends linearly in upward and downward directions at 90 degree, as well as the blade may be windingly extended to upward and downward directions, such as a spiral shape having a predetermined lead angle.

The shape of these individual composition members is such that the front-end part 21 of the blade 12 and the slit 18 are at the same position where they are overlapped with each other in a longitude direction of the slit 18 (upward and downward directions in the drawing). Then, due to the rotation of the rotor 2, the fluid to be processed is sheared between the blade 12 and the screen member 19 in the same position where they are overlapped, and as the blade 12 rotates, a kinetic energy so as to generate the intermittent jet flow can be given to the fluid to be processed that is passing through the slit 18. In the present invention, when the relationship between the blade 12 and the slit 18 is defined, unless otherwise specifically mentioned, it means the relationship in the same position.

The clearance between the screen 9 and the blade 12, namely, the clearance between the inner wall surface of the screen 9 and the front-end part 21 of the blade 12, can be arbitrarily changed within the range which the shearing and the intermittent jet flow are generated, though usually the clearance is preferably in the range of about 0.2 mm to about 2.0 mm. When the screen 9 having an entirely tapered shape as shown in FIG. 2 is used, this clearance can be readily adjusted by making at least any one of the stirring room 7 and the blade 12 movable.

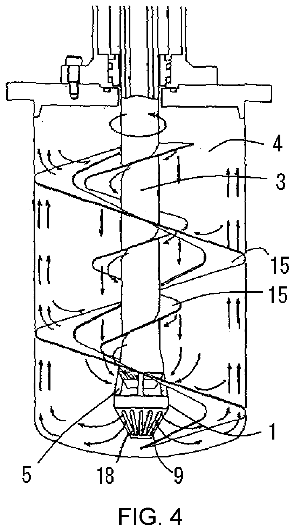

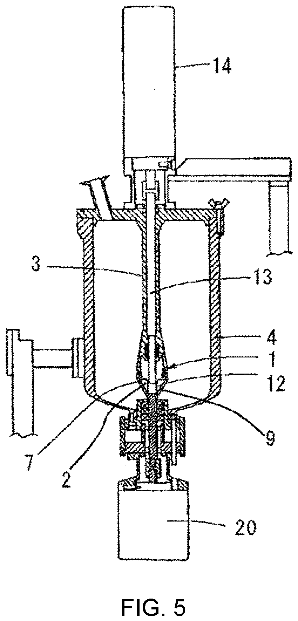

In addition, as another structure of the stirrer, those shown in FIG. 4 and FIG. 5 may be also adopted.

In the example of FIG. 4, in order to perform uniform stirring of the entire fluid to be processed in the storing vessel 4, a separate stirring apparatus is arranged in the storing vessel 4. Specifically, a stirring blade 15 for stirring the entire storing vessel 4 may be arranged so as to rotate in the same body together with the stirring room 7. In this case, the stirring blade 15 and the stirring room 7 having the screen 9 are rotated together. At that time, the rotation direction of the stirring blade 15 and of the stirring room 7 may be the same as or opposite to the rotation direction of the rotor 2. Namely, since the rotation of the stirring room 7 having the screen 9 is slower as compared with the rotation of the rotor 2 (specifically, a peripheral velocity of rotation of the screen is in the range of about 0.02 m to about 0.5 m/second), there is no substantial effect on generation of the shearing and the intermittent jet flow.

Further, in the example of FIG. 5, the stirring room 7 is rotatable with respect to the support tube 3, a rotation axis of a second motor 20 is connected to the front-end of the stirring room 7, and the screen 9 can be rotated at high speed. The rotation direction of the screen 9 is opposite to the rotation direction of the rotor 2 arranged inside the stirring room 7. By so doing, a relative rotation speed between the screen 9 and the rotor 2 is increased.

With regard to the stirrer described above, the present invention may be applied in the way as described below. In the stirrer according to the present invention, the process of emulsification, dispersion, or mixing is performed by generation of a liquid-liquid shear force at the speed interface by the intermittent jet flow. At this time, in the stirrer according to the embodiment of the present invention, for example, the rotor 2 and the screen 9 shown in FIG. 6(A), FIG. 7 (A) to (E), and FIG. 8 (A) to (F) may be used. The rotor 2 is shown only in FIG. 6 and FIG. 7 (A), (B), and (F), but in each embodiment of the present application, the rotor 2 rotates counterclockwise

FIG. 6 to FIG. 8 show the enlarged view of the essential part of the stirrer according to the embodiment to which the present invention is applied, or the enlarged view of the essential part of the conventional stirrer, and they are schematic views, which do not accurately describe the size of each part.

The center lines shown in each of FIG. 6 to FIG. 8 indicate the radial direction.

The stirrer according to the present invention is characterized by the shape of the transverse section (cross section perpendicular to the axial direction of the rotation axis 13) of the plurality of the slits 18 provided on the screen 9. In the embodiments of the present application, the shapes of the traverse section of each slit 18 are the same, but a plurality of the shapes may be used.

Each of the slits 18 is provided with an inflow opening 33, which is the opening of the slit 18 provided on the inner wall surface of the screen 9, and an outflow opening 34, which is the opening of the slit 18 provided on the outer wall surface of the screen 9; the space between the inflow opening 33 and the outflow opening 34 is served as a slit space 35, a width (Si) of the inflow opening 33 in the circumferential direction and a width (So) of the outflow opening 34 in the circumferential direction are provided so as to be larger than a width (Sm) of the slit space 35 in the circumferential direction. Here, the width (Sm) of the slit space 35 in the circumferential direction is the width of the narrowest narrow part in the circumferential direction among the widths of the slit space 35 in the circumferential direction.

The each of the slits includes at least an inflow-side region 22 where the fluid to be processed flows into the slit 18 from an inner side of the screen 9 and an outflow-side region 23 where the fluid to be processed flows out from the slit 18 to an outside of the screen 9, and the inflow-side region 22 is defined by an inflow-side end surface 26 in a front side and an inflow-side end surface 30 in a rear side, which are arranged with a distance in a rotation direction of the plurality of the blades 12, and the outflow-side region 23 is defined by an outflow-side end surface 27 in the front side and an outflow-side end surface 31 in the rear side, which are arranged with a distance in the rotation direction of the blades 12. The boundary inside of the inflow-side region 22 (inside in the radial direction) is the inflow opening 33, and the boundary outside of the outflow-side region 23 (outside in the radial direction) is the outflow opening 34.

As the slit 18, examples are shown in FIG. 6, FIG. 7 (A) to (E), and FIG. 8 (A) to (F).

For example, in the slit 18 shown in FIG. 7(A), the inflow-side end surface 26 in the front side is inclined to a forward direction in the rotation direction of the plurality of the blades 12, and the inflow-side end surface 30 in the rear side is inclined to a backward direction in the rotation direction of the plurality of blades 12, in which these of which end surfaces define the inflow-side region 22; and the outflow-side end surface 27 in the front side is inclined to the backward direction in the rotation direction of plurality of the blades 12, and the outflow-side end surface 31 in the rear side is inclined to the forward direction in the rotation direction of the plurality of the blades 12, in which these of end surfaces define the outflow-side region 23. Here, the inclination to the forward direction means that the inflow-side end surface 26 in the front side and the outflow-side end surface 31 in the rear side are inclined to the forward direction in the rotation direction of the plurality of the blades 12 as they move from the inside to the outside of the screen, namely as they move toward an outer diameter direction of the screen 9; and the inclination to the backward direction means that the inflow-side end surface 30 in the rear side and the outflow-side end surface 27 in the front side are inclined to the backward direction in the rotation direction of the plurality of the blades 12 as they move from the inside to the outside of the screen, namely, as they move toward an outer diameter direction of the screen 9. Hereinafter, the same applies to the case that each end surface constituting the slit 18 is inclined to the forward direction or to the backward direction in the rotation direction of the plurality of the blades 12. In this case, a front side surface 25 that defines the slit 18 is constituted by the inflow-side end surface 26 in the front side and the outflow-side end surface 27 in the front side, and a rear side surface 29 that defines the slit 18 is constituted by the inflow-side end surface 30 in the rear side and the outflow-side end surface 31 in the rear side. In this example, the slit space 35 is composed of the inflow-side region 22 and the outflow-side region 23, the boundary between the inflow-side region 22 and the outflow-side region 23 is the narrow part, and the width of the narrow part in the circumferential direction is the width (Sm) of the slit space 35 in the circumferential direction. The inclination angles of these end surfaces (the inflow-side end surface 26 in the front side and the inflow-side end surface 30 in the rear side, as well as the outflow-side end surface 27 in the front side and the outflow-side end surface 31 in the rear side) may be the same or may be different. Further, in this example, the width of the slit 18 in the circumferential direction is gradually decreased from the inflow opening 33 toward the narrow part, and the width of the slit 18 in the circumferential direction is gradually increased from the narrow part toward the outflow opening 34.

In the slit 18 shown in FIG. 7(E), similarly to the slit 18 shown in FIG. 7(A), the inflow-side end surface 26 in the front side is inclined to the forward direction in the rotation direction of the plurality of the blades 12, and the inflow-side end surface 30 in the rear side is inclined to the backward direction in the rotation direction of the plurality of the blades 12, in which these of end surfaces define the inflow-side region 22; and the outflow-side end surface 27 in the front side is inclined to the backward direction in the rotation direction of the plurality of the blades 12, and the outflow-side end surface 31 in the rear side is inclined to the forward direction in the rotation direction of the plurality of the blades 12, in which these of end surfaces define the outflow-side region 23; however, in the slit 18 shown in FIG. 7(A), the width (Si) of the inflow opening 33 in the circumferential direction is larger than the width (So) of the outflow opening 34 in the circumferential direction, whereas in the slit 18 shown in FIG. 7(E), the width (So) of the outflow opening 34 in the circumferential direction is larger than the width (Si) of the inflow opening 33 in the circumferential direction.

Further, each slit 18 may be provided with an intermediate region 24 between the inflow-side region 22 and the outflow-side region 23. The intermediate region 24 is defined by an intermediate end surface 28 in the front side and an intermediate end surface 32 in the rear side, which are arranged with a distance in the rotation direction of the plurality of the blades 12, and the intermediate end surface 28 in the front side and the intermediate end surface 32 in the rear side have a width in the radial direction.

For example, similarly to the slit 18 shown in FIG. 7(A), in the slits 18 shown in FIG. 6 and FIG. 7 (B) to (D), the inflow-side end surface 26 in the front side is inclined to the forward direction in the rotation direction of the plurality of the blades 12 and the inflow-side end surface 30 in the rear side is inclined to the backward direction in the rotation direction of the plurality of the blades 12, in which these of end surfaces define the inflow-side region 22; and the outflow-side end surface 27 in the front side is inclined to the backward direction in the rotation direction of the plurality of the blades 12 and the outflow-side end surface 31 in the rear side is inclined to the forward direction in the rotation direction of the plurality of the blades 12, in which these of end surfaces define the outflow-side region 23; in this slit, the intermediate region 24 is defined by the intermediate end surface 28 in the front side and the intermediate end surface 32 in the rear side, both of which have a width in the radial direction, between the inflow-side region 22 and the outflow-side region 23. In this case, the front side surface 25 that defines the slit 18 is composed of the inflow-side end surface 26 in the front side, the intermediate end surface 28 in the front side, and the outflow-side end surface 27 in the front side; and the rear side surface 29 that defines the slit 18 is composed of the inflow-side end surface 30 in the rear side, the intermediate end surface 32 in the rear side, and the outflow-side end surface 31 in the rear side. In these examples, the slit space 35 is composed of the inflow-side region 22, the intermediate region 24, and the outflow-side region 23, and since neither the intermediate end surface 28 in the front side nor the intermediate end surface 32 in the rear side is inclined to the forward direction or to the backward direction in the rotation direction of the plurality of the blades 12, thus, the intermediate region 24 becomes the narrow part, and the width of the narrow part in the circumferential direction becomes the width (Sm) of the slit space 35 in the circumferential direction. Here, at least any one of the intermediate end surface 28 in the front side and the intermediate end surface 32 in the rear side may be inclined to the forward direction or to the backward direction in the rotation direction of the plurality of the blades 12. In this case, of the boundary between the inflow-side region 22 and the intermediate region 24 and the boundary between the intermediate region 24 and the outflow-side region 23, the boundary having a smaller width in the circumferential direction is the narrow part, and the width of the narrow part in the circumferential direction becomes the width (Sm) of the slit space 35 in the circumferential direction. In addition, the end formed by the inflow-side end surface 26 in the front side and the intermediate end surface 28 in the front side, the end formed by the intermediate end surface 28 in the front side and the outflow-side end surface 27 in the front side, the end formed by the inflow-side end surface 30 in the rear side and the intermediate end surface 32 in the rear side, and the end formed by the intermediate end surface 32 in the rear side and the outflow-side end surface 31 in the rear side may have a rounded R surface.

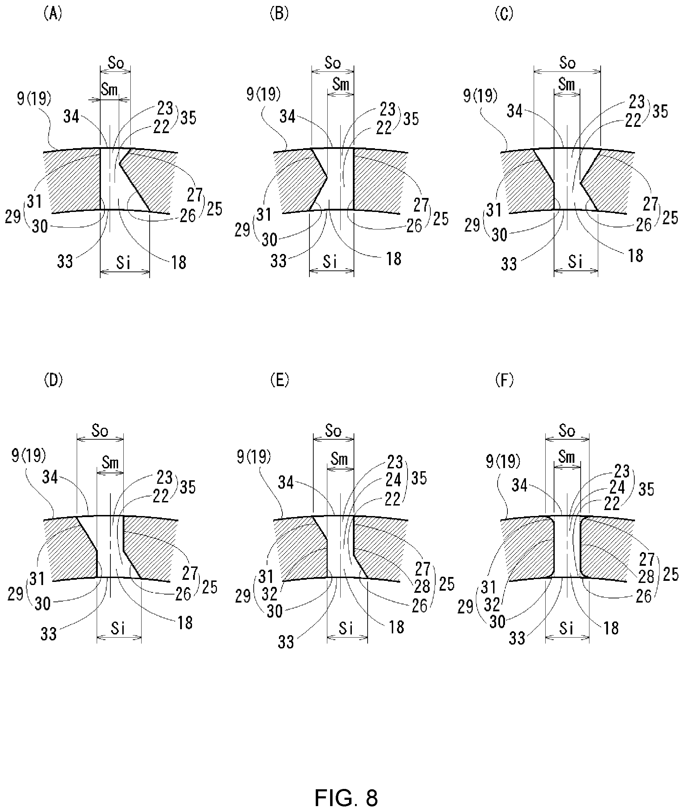

Further, in the slit 18, the inflow-side end surface 30 in the rear side and the outflow-side end surface 31 in the rear side, which constitute the rear side surface 29, is not inclined to the forward direction or to the backward direction in the rotation direction of the plurality of the blades 12, while the inflow-side end surface 26 in the front side is inclined to the forward direction in the rotation direction of the plurality of the blades 12, whereby the outflow-side end surface 27 in the front side may be inclined to the backward direction in the rotation direction of the plurality of the blades 12 (FIG. 8(A)). Further, in the slit 18, the inflow-side end surface 26 in the front side and the outflow-side end surface 27 in the front side, which constitute the front side surface 25, is not inclined to the forward direction or to the backward direction in the rotation direction of the plurality of the blades 12, while the inflow-side end surface 30 in the rear side is not inclined to the backward direction in the rotation direction of the plurality of the blades 12, whereby the outflow-side end surface 31 in the rear side may be inclined to the forward direction in the rotation direction of the blades 12 (FIG. 8(B)). Also, in the slit 18, the inflow-side end surface 30 in the rear side is not inclined to the forward direction or to the backward direction in the rotation direction of the plurality of the blades 12, while the inflow-side end surface 26 in the front side is inclined to the forward direction in the rotation direction of the plurality of the blades 12, and the outflow-side end surface 27 in the front side is inclined to the backward direction in the rotation direction of the plurality of the blades 12, whereby the outflow-side end surface 31 in the rear side may be inclined to the forward direction in the rotation direction of the plurality of the blades 12 (FIG. 8(C)). Also, in the slit 18, the inflow-side end surface 30 in the rear side is not inclined to the forward direction or to the backward direction in the rotation direction of the plurality of the blades 12, while the inflow-side end surface 26 in the front side is inclined to the forward direction in the rotation direction of the blades 12, and the outflow-side end surface 27 in the front side is neither inclined to the forward direction nor to the backward direction in the rotation direction of the plurality of the blades 12, whereby the outflow-side end surface 31 in the rear side may be inclined to the forward direction in the rotation direction of the plurality of the blades 12 (FIG. 8(D)). In these examples, the slit space 35 is composed of the inflow-side region 22 and the outflow-side region 23, the boundary between the inflow-side region 22 and the outflow-side region 23 is the narrow part, and the width of the narrow part in the circumferential direction is the width (Sm) of the slit space 35 in the circumferential direction.

Also, in the slit 18, the inflow-side end surface 30 in the rear side is not inclined to the forward direction or to the backward direction in the rotation direction of the plurality of the blades 12, the inflow-side end surface 26 in the front side is inclined to the forward direction in the rotation direction of the plurality of the blades 12, and the outflow-side end surface 27 in the front side is not inclined to the forward direction or to the backward direction in the rotation direction of the plurality of the blades 12, the outflow-side end surface 31 in the rear side is inclined to the forward direction in the rotation direction of the plurality of the blades 12, in this case, the intermediate region 24 may be defined by the intermediate end surface 28 in the front side and the intermediate end surface 32 in the rear side having the widths in the radial direction, which formed between the inflow-side region 22 and the outflow-side region 23, (FIG. 8(E)). In this example, the slit space 35 is composed of the inflow-side region 22, the intermediate region 24, and the outflow-side region 23, since neither the intermediate end surface 28 in the front side nor the intermediate end surface 32 in the rear side is inclined to the forward direction or to the backward direction in the rotation direction of the plurality of the blades 12, the intermediate region 24 becomes the narrow part, and the width of the narrow part in the circumferential direction becomes the width (Sm) of the slit space 35 in the circumferential direction.

In the slit 18, at least any one of the end of the inflow opening 33 formed by the front side surface 25 and the inner wall surface of the screen member 19, the end of the inflow opening 33 formed by the rear side surface 29 and the inner wall surface of the screen member 19, the end of the outflow opening 34 formed by the front side surface 25 and the outer wall surface of the screen member 19, and the end of the outflow opening 34 formed by the rear side surface 29 and the outer wall surface of the screen member 19 may have a rounded shape. The rounded R surface becomes the end surfaces that define the inflow-side region 22 and the outflow-side region 23, for example, when the end of the inflow opening 33 formed by the front side surface 25 and the inner wall surface of the screen member 19 is made round, the rounded R surface becomes the inflow-side end surface 26 in the front side. In the slit 18 having been made round in the end of the inflow opening 33 and in the end of the outflow opening 34 (FIG. 8(F)), especially in the inflow-side region 22, the end is not sharp, so that reduction in the pressure decrease of the fluid to be processed is preferable as compared with the end having an obtuse angle to be described later. In the slit 18, in the case that the end of the inflow opening 33 and the end of the outflow opening 34 are made round, they are included in those that are inclined to the forward direction or to the backward direction in the rotation direction of the plurality of the blades 12.

For the plurality of the slits 18, the width (Si) of the inflow opening 33 in the circumferential direction and the width (So) of the outflow opening 34 in the circumferential direction is provided so as to be larger than the width (Sm) of the slit space 35 in the circumferential direction, so that in this stirrer, the liquid-liquid shear force in the speed interface can be increased, as a result, it was found that this is very effective in the point of realizing the extremely fine dispersion or emulsification such as nano-dispersion or nano-emulsification. Based on this finding, the present invention could be completed.

The action of the intermittent jet flow will be explained with comparing to the conventional example.

As described above, the intermittent jet flow is generated by the rotation of the blade, but to explain this in more detail, the pressure of the fluid to be processed is increased on the front side of the rotation direction of the blade. By this, the fluid to be processed is discharged as the intermittent jet flow from the slit located on the front side of the blade. On the other hand, in the back side of the rotation direction of the blade, a pressure of the fluid to be processed decreases, so that the fluid to be processed is sucked from the slit located in the back side thereof. As a result, on the outside of the screen, a forward and reverse flows (discharge and suction) is generated in the fluid to be processed, and by relative speed difference at the interface of the both flows, the liquid-liquid shear force is generated between the fluids to be processed.

In order to obtain the expected effect of emulsification, dispersion, stirring, or mixing by the intermittent jet flow, it is required to increase the liquid-liquid shear force by the intermittent jet flow; in order to increase the liquid-liquid shear force by the intermittent jet flow, it is required to increase the relative speed difference at the interface between the forward flow and the reverse flow (discharge from and suction to the slit 18) of the fluid to be processed generated by the intermittent jet flow. To achieve this, it is required to increase the relative speed difference between the forward flow and the reverse flow (discharge and suction) by increasing the speed of the intermittent jet flow, by increasing the suction speed of the fluid to be processed that is sucked from the outside of the screen into the inside thereof thorough the slit, or by both.

An illustrative example of the conventional slit 18 is shown in FIG. 7(F). The blade rotationally moves by the rotation of the rotor, but when the front side of the blade in the rotation direction approaches to the inflow opening 33 of the slit 18 in the screen 9, the flow of the fluid to be processed flowing along the inner wall surface of the slit member 19 of the screen 9 becomes the flow along the front side surface 25 that defines the slit 18, so that the direction of the flow of the fluid to be processed suddenly bends. In this case, the pressure of the fluid to be processed drastically is decreased by the end of the inflow opening 33 formed by the inner wall surface of the slit member 19 of the screen 9 and the front side surface 25, thereby generating cavitation. In the conventional slit 18, as shown in FIG. 7(F), neither the front side surface 25 nor the rear side surface 29, both of which define the slit 18, is inclined to the forward direction or to the backward direction in the rotation direction, and the width (Si) of the inflow opening 33 in the circumferential direction, which is the opening of the slit 18 provided in the inner wall surface of the screen 9, and the width (So) of the outflow opening 34 in the circumferential direction, which is the opening of the slit 18 provided in the outer wall surface of the screen 9, are the same. Therefore, the angle of the end of the inflow opening 33 is almost a right angle ($\alpha$) which causes significant amount of generation of cavitation, thereby generating a large amount of air bubbles.

Accordingly, in the case of conventional slit 18, the width of the slit 18 of the screen 9 in the circumferential direction could not be made extremely narrowed.

On the other hand, in the embodiments of the present invention, for example, in the embodiments shown in FIG. 6, FIG. 7 (A) to (E), and FIG. 8 (A) to (F), in the plurality of the slits 18, the width (So) of the outflow opening 34 in the circumferential direction and the width (Si) of the inflow opening 33 in the circumferential direction are provided so as to be larger than the width (Sm) of the slit space 35 in the circumferential direction. Firstly, by providing the width (Si) of the inflow opening 33 in the circumferential direction so as to be larger than the width (Sm) of the slit space 35 in the circumferential direction, the flow speed of the intermittent jet flow passing through the slit 18 can be accelerated by the nozzle effect. In addition, of the inflow-side end surface 26 in the front side and the inflow-side end surface 30 in the rear side, both of which define the inflow-side region 22 of the slits 18, when at least the inflow-side end surface 26 in the front side is inclined to the forward direction in the rotation direction of the plurality of the blades 12, the end of the inflow opening 33 formed by the inflow-side end surface 26 in the front side and the inner wall surface of the screen member 19 becomes an obtuse angle ($\beta$), and the extreme pressure decrease at the end of the inflow opening 33 is reduced, so that the fluid to be processed can be effectively converted to the jet flow. As a matter of course, by providing the width (Si) of the inflow opening 33 in the circumferential direction so as to be larger than the width (Sm) of the slit space 35 in the circumferential direction, the pressure loss of the fluid to be processed is reduced, thereby suppressing the generation of cavitation and air bubbles. As a result, the speed of the intermittent jet flow discharged from the inside of the screen 9 to the outside thereof through the slit 18 can be faster than the conventional speed.

Next, the width (So) of the outflow opening 34 in the circumferential direction is provided so as to be larger than the width (Sm) of the slit space 35 in the circumferential direction, so that the pressure loss of the fluid to be processed sucked from the outside of the screen 9 into the inside thereof through the slit 18 is reduced. As a result, the suction speed of the fluid to be processed from the outside of the screen 9 into the inside thereof through the slit 18 can be increased than the conventional suction speed.

As described above, the speed of the intermittent jet flow discharged from the inside of the screen 9 to the outside thereof through the slit 18 becomes faster than before, and the suction speed of the fluid to be processed from the outside of the screen 9 into the inside thereof through the slit 18 becomes faster than before; as a result, the relative speed difference between the forward flow and the reverse flow (discharge and suction) of the fluid to be processed in the interface thereof increases, so that the shear force generated between the fluids to be processed can be increased.

In addition, in the plurality of the slits 18, the width (So) of the outflow opening 34 in the circumferential direction and the width (Si) of the inflow opening 33 in the circumferential direction are provided so as to be larger than the width (Sm) of the slit space 35 in the circumferential direction, so that a potential core 36 is formed in the center part of the slit 18. The potential core 36 is substantially determined by the width (Sm) of the slit space 35 in the circumferential direction, which is the width of the narrowest narrow part among the width of the slit space in the circumferential direction, specifically, determined by the width of the intermediate region 24 in the circumferential direction; and in the radial direction, the potential core is formed in the almost entire region, especially formed in the region to the outside of the narrow part, and constitutes the center of the intermittent jet flow by the fluid to be processed. An illustrative example of the potential core 36 is shown n FIG. 6.

The intermittent jet flow having passed through the narrow part is discharged to the outside of the screen 9 passing through the outflow-side region 23 that is larger than the narrow part. At this time, in the transition region, which is the region near the outflow opening 34 of the slit 18, the intermittent jet flow that forms the potential core 36 becomes the accelerated flow by the nozzle effect and suppression of cavitation. On the other hand, in the fluid to be processed around the potential core 36, the speed difference from the speed of the intermittent jet flow that forms the potential core 36 further is increased. As a result, of the intermittent jet flow in the transition region, a large speed difference is generated between the flow of the potential core 36 and the flow around the potential core, so that a large liquid-liquid shear force can be obtained even in the speed interface in the outflow-side region 23 including the transition region.

It is difficult to directly measure this flow speed of the fluid to be processed, but as described in the Examples described later, in the stirrer according to the embodiment of the present invention, it was confirmed that atomization of the fluid to be processed could be clearly facilitated as compared with the conventional stirrer.

With Regard to the Screen

The screen 9, as described above, may be carried out as that the diameter of the tapered shape or the like changes. In the present invention, when the inner diameter changes, unless otherwise specifically mentioned, the maximum inner diameter means the maximum inner diameter (c) of the screen 9 in the same position where the front-end part 21 of the blade 12 and the slit 18 are overlapped in the longitude direction of the slit 18.

With respect to the slit and the screen member The slit 18 may be extended parallel to the axial direction of the rotation axis of the rotor 2 or may have an angle with respect to the axial direction such as one extending in spiral shape. In any cases, in the present invention, unless otherwise specifically mentioned, the width of the slit 18 in the circumferential direction is a length of the screen 9 in the circumferential direction in the same position in which the front-end part 21 of the blade 12 and the slit 18 are overlapped with each other in the longitude direction of the slit 18 (in other words, a direction perpendicular to the axial direction of the rotation axis of the rotor 2). A position of the slit 18 in the axial direction of the rotation axis of the rotor 2 is not restricted so far as it is in the same position, though it is preferably at least the position where the axial direction of the rotation axis 13 is the maximum inner diameter (c) of the screen 9. As an Example of the width of the slit 18 in the circumferential direction, the width (Si) of the inflow opening 33 in the circumferential direction, the width (So) of the outflow opening 34 in the circumferential direction, and the width (Sm) of the slit space in the circumferential direction can be mentioned. The width of the slit 18 in the circumferential direction may be appropriately changed on the condition that the intermittent jet flow is generated and the fluid to be processed is well sucked from the outside of the screen 9 into the inside thereof through the slit 18.

The width (Si) of the inflow opening 33 in the circumferential direction is preferably in the range of 1.0 mm to 8.0 mm, while more preferably in the range of 1.5 mm to 6.0 mm. When the width (Si) of the inflow opening 33 in the circumferential direction is less than 1.0 mm, the nozzle effect as described above cannot be exhibited, the pressure loss of the fluid to be processed increases, thereby being difficult to increase the speed of the intermittent jet flow. Further, even when the width (Si) of the inflow opening 33 in the circumferential direction is made larger than 8 mm, the effect of the pressure loss of the fluid to be processed is not further enhanced. In addition, the number of the slit 18 cannot be ensured more than the width of the adjacent slits 18, thus, the width (Si) of the inflow opening 33 in the circumferential direction is preferably 8.0 mm or less.

Also, the width (So) of the outflow opening 34 in the circumferential direction is preferably in the range of 1.0 mm to 8.0 mm, while more preferably in the range of 1.5 mm to 6.0 mm. When the width (So) of the outflow opening 34 in the circumferential direction is less than 1.0 mm, since the pressure loss of the fluid to be processed is large due to the suction resistance, the suction speed cannot be increased as expected. When the effect of increasing the suction speed is expected, there is no point in increasing the width (So) of the outflow opening 34 in the circumferential direction to more than 8.0 mm, rather, increasing the number of the slit has a greater effect of increasing the suction speed.

The width (Sm) of the slit space 35 in the circumferential direction is preferably in the range of 0.3 mm to 5.0 mm, while more preferably in the range of 0.5 mm to 3.0 mm. In the intermittent jet flow discharged from the inside of the screen 9 to the outside thereof through the slit 18 due to the high-speed rotation of the rotor 2, when the width (Sm) of the slit space 35 in the circumferential direction is less than 0.3 mm, not only it is difficult for the fluid to be processed to generate the intermittent jet flow due to the pressure loss thereof, but also there may readily generate the cavitation problem. When the width (Sm) of the slit space 35 in the circumferential direction is larger than 5.0 mm, the speed of the intermittent jet flow cannot be increased.

In addition, it is preferable that the width of the slit 18 in the circumferential direction gradually decrease from the inflow opening 33 toward the narrow part and gradually increase from the narrow part toward the outflow opening 34.

In the present invention, in the plurality of the slits 18, as far as the width (Si) of the inflow opening 33 in the circumferential direction and the width (So) of the outflow opening 34 in the circumferential direction is provided so as to be larger than the width (Sm) of the slit space in the circumferential direction, neither the size of the width (Si) of the inflow opening 33 in the circumferential direction and the width (So) of the outflow opening 34 in the circumferential direction nor the size of the inflow-side region 22, the outflow-side region 23, and the intermediate region 24 in the transverse section (the shape of the cross section which is perpendicular to the axial direction of the rotation axis 13)do matter.

For example, as shown in FIG. 7 (A) to (C), the width (Si) of the inflow opening 33 in the circumferential direction may be larger than the width (So) of the outflow opening 34 in the circumferential direction, or as shown in FIG. 7(E), the width (So) of the outflow opening 34 in the circumferential direction may be larger than the width (Si) of the inflow opening 33 in the circumferential direction, or as shown in FIG. 7(D), the width (Si) of the inflow opening 33 in the circumferential direction and the width (So) of the outflow opening 34 in the circumferential direction may be almost the same. From a viewpoint of increasing the speed of the intermittent jet flow and the like, it is preferable that the width (Si) of the inflow opening 33 in the circumferential direction be larger than the width (So) of the outflow opening 34 in the circumferential direction.

However, from a viewpoint of forming the potential core 36, for example, it is preferable to provide the intermediate region 24 between the inflow-side region 22 and the outflow-side region 23 as shown in FIG. 6, and FIG. 7 (B) to (D). From a viewpoint of stability of the potential core 36 to be formed, the width of the intermediate region 24 in the radial direction is preferably 1/3 or more of the width of the slit 18 in the radial direction. From a viewpoint of ensuring the widths of the inflow-side region 22 and the outflow-side region 23 in the radial direction, the width of the intermediate region 24 in the radial direction is preferably 2/3 or less of the width of the slit 18 in the radial direction. Note that, as shown in FIG. 7 (A) and (E), for example, the potential core 36 can be formed even in the case that the intermediate region 24 is not provided between the inflow-side region 22 and the outflow-side region 23.

In the embodiment of the present invention, it is preferable that at least any one of the inflow-side end surface 26 in the front side, the inflow-side end surface 30 in the rear side, the outflow-side end surface 27 in the front side, and the outflow-side end surface 31 in the rear side be inclined to the forward direction or to the backward direction in the rotation direction of the plurality of the blades 12, as for the rotation direction, it is preferable that the inflow-side end surface 26 in the front side and the outflow-side end surface 31 in the rear side be inclined to the forward direction in the rotation direction of the plurality of the blades 12, and that the inflow-side end surface in the rear side and the outflow end surface in the front side be inclined to the backward direction in the rotation direction of the plurality of the blades 12. Here, the inclination to the forward direction means that the inflow-side end surface 26 in the front side and the outflow-side end surface 31 in the rear side are inclined to the forward direction in the rotation direction of the plurality of the blades 12 as they move toward the outer diameter direction of the screen 9, and the inclination to the backward direction means that the inflow-side end surface 30 in the rear side and the outflow-side end surface 27 in the front side are inclined to the backward direction in the rotation direction of the plurality of the blades 12 as they move toward the outer diameter direction of the screen 9. With regard to the inclination to the forward direction or to the backward direction, the angle θ of each end surface against the radius passing through the center of the narrow part in the circumferential direction is preferably in the range of 1 degree to 45 degrees, although this range depends on the maximum inner diameter (c) of the screen 9. Specifically, as shown in FIG. 6, the angle formed by the extended line of the inflow-side end surface 30 in the rear side and the radius passing through the center of the narrow part in the circumferential direction is set to θ (θ2), and the angle formed by the extended line of the outflow-side end surface 27 in the front side and the radius passing through the center of the narrow part in the circumferential direction is set to θ (θ1). Similarly, the angle θ of the inflow-side end surface 26 in the front side and of the outflow-side end surface 31 in the rear side against the radius passing through the center of the narrow part in the circumferential direction may be defined.

From a viewpoint of the nozzle effect, the present invention may be carried out such that the inflow-side end surface 26 in the front side is not inclined to the forward direction or to the backward direction in the rotation direction of the plurality of the blades 12, but that the inflow-side end surface 30 in the rear side is inclined to the backward direction in the rotation direction of the plurality of the blades 12, which these end surfaces define the inflow-side region 22 (for example, FIG. 8(B)). Although not shown, the present invention may also be carried out such that the inflow-side end surface 26 in the front side is not inclined to the forward direction or to the backward direction in the rotation direction of the plurality of the blades 12, but that the end of the inflow opening 33 formed by the rear side surface 29 and the inner wall surface of the screen member 19 is made round to designate the inflow-side end surface 30 in the rear side as the R-surface. In order to satisfy both the nozzle effect and suppression of cavitation in the inflow-side region 22, it is preferable that as the slit 18, at least the inflow-side end surface 26 in the front side be inclined to the forward direction in the rotation direction of the plurality of the blades 12.

Further, the present invention may be carried out such that the outflow-side end surface 27 in the front side is not inclined to the forward direction or to the backward direction in the rotation direction of the plurality of the blades 12, but that the outflow-side end surface 31 in the rear side is inclined to the forward direction in the rotation direction of the plurality of the blades 12, which these end surfaces define the outflow-side region 23 (for example, FIG. 8(B)). Although not shown, the present invention may also be carried out such that the outflow-side end surface 27 in the front side is not inclined to the forward direction or to the backward direction in the rotation direction of the plurality of the blades 12, but that the end of the outflow opening 34 formed by the rear side surface 29 and the outer wall surface of the screen member 19 is made round to designate the outflow-side end surface 31 in the rear side as the R-surface.

However, it is preferable that at least the outflow-side end surface 27 in the front side be inclined to the backward direction in the rotation direction of the plurality of the blades 12. This is because when the rotor 2 rotates counterclockwise, the jet flow tends to incline in the clockwise direction accompanied by the reflection; and it is advantageous to incline the outflow-side end surface 27 in the front side to the rotation direction of the plurality of the blade 12 so as to be along with the flow of the jet flow.

The width of the screen member 19 in the circumferential direction (in other words, the distance in the circumferential direction between the slits 18 being adjacent with each other) can be arbitrarily changed. As the illustrative example of the width of the screen member 19 in the circumferential direction, it includes the width (ti) of the inner wall surface of the screen member 19 in the circumferential direction and the width (to) of the outer wall surface of the screen member 19 in the circumferential direction, the width (to) of the outer wall surface of the screen member 19 in the circumferential direction is preferably in the range of 0.5 to 10 times, more preferably in the range of about 0.6 to about 2 times, relative to the width (So) of the outflow opening 34 in the circumferential direction. When the width (to) of the outer wall surface of the screen member 19 in the circumferential direction is made too wide, the number of shearing is reduced which leads to a decrease in the amount of the processing performance, or when this width is made too narrow, this may be substantially the same as the slit 18 being continuous, or a mechanical strength may be significantly reduced.

With Regard to the Rotor

As described above, the rotor 2 is a rotating body having the plurality of the blades 12.

The blade 12 may be used those shown in Patent Documents 1 to 3 (the width b of the front-end part 21 of the blade 12 in the rotation direction is almost the same as the widths (Si) of the slit 18 in the circumferential direction, or the width b of the front-end part 21 of the blade 12 in the rotation direction is slightly larger than the other widths) or may be used shown in Patent Document 4 (the width b' of the front-end part 41 of the blade 40 is larger than the widths (Si) of the slit 18 in the circumferential direction) (see, Fig. 6). When the width b of the blade 12 of the rotor 2 in the rotation direction is smaller than the width (Si) of the inflow opening 33 in the circumferential direction, it is not preferable in view of generation of the intermittent jet flow.

When maximum outer diameter of the rotor 2 is D, in the plurality of the slits 18 of the screen 9, the width (v) thereof in the radial direction is preferably defined by the following formula (1).

$$0.02 \times D \leq v \leq 0.15 \times D \qquad \text{formula (1)}$$

D is the maximum outer diameter of the rotor 2 and is the maximum outer diameter of the rotor 2 at the same position where the front-end part 21 of the blade 12 and the slit 18 are overlapped with each other in the longitude direction of the slit 18.

When the width (v) of the slit 18 in the radial direction is less than 0.02D, the nozzle effect as described above cannot be obtained, so that it is difficult to form the intermittent jet flow. When the width (v) of the slit 18 in the radial direction is more than 0.15D, the pressure loss of the fluid to be processed is too large, thus, it is difficult to increase the speed of the intermittent jet flow. The range of the appropriate width (v) in the radial direction for reducing the cavitation as much as possible and obtaining the maximum effect of the intermittent jet flow is the range shown in the formula (1).

Preferable Application Condition

The numerical conditions of the screen 9, the slit 18, and the rotor 2 to which the preset invention can be applied, and which are considered to be suitable for mass production with the current technological capabilities are as follows.

Maximum inner diameter (c) of the screen 9: 30 to 500 mm (however, maximum diameter in the same position in which the front-end part 21 of the blade 12 and the slit 18 are overlapped with each other in the longitude direction of the slit 18)

Rotation number of the screen 9: 15 to 390 rotations/second Number of the slit 18: 12 to 500

Maximum outer diameter of the rotor 2: 30 to 500 mm (however, maximum diameter in the same position in which the front-end part 21 of the blade 12 and the slit 18 are overlapped with each other in the longitude direction of the slit 18)

Rotation number of the rotor 2: 15 to 390 rotations/second

Needless to say, these numerical conditions are merely shown as one example, for example, with progress of technologies such as rotation control in future, the present invention does not exclude the adoption of the conditions other than the above conditions.

Hereinafter, the present invention will be explained more specifically by showing Examples and Comparative Examples. However, the present invention is not restricted to the Examples described below.

The shape of the transverse section of the slit 18 used in Examples is shown in FIG. 7 (A) and (B), and the shape of the transverse section of the slit 18 used in Comparative Example is shown in FIG. 7(F). In the slit 18 used in the Examples, the width (So) of the outflow opening 34 in the circumferential direction and the width (Si) of the inflow opening 33 in the circumferential direction are provided so as to be larger than the width (Sm) of the slit space 35 in the circumferential direction; and in the slit 18 used in the Comparative Example, the width (Si) of the inflow opening 33 in the circumferential direction, the width (So) of the outflow opening 34 in the circumferential direction, and the width (Sm) of the slit space 35 in the circumferential direction have the same width (Si=So=Sm).

In FIG. 7(A), the width (So) of the outflow opening 34 in the circumferential direction is 1.6 mm, the width (Si) of the inflow opening 33 in the circumferential direction is 2.0 mm, and the width (Sm) of the slit space 35 in the circumferential direction is 0.8 mm. In FIG. 7(B), the width (So) of the outflow opening 34 in the circumferential direction is 1.6 mm, the width (Si) of the inflow opening 33 in the circumferential direction is 2.0 mm, and the width (Sm) of the slit space 35 in the circumferential direction is 0.8 mm. In FIG. 7(F), the width (So) of the outflow opening 34 in the circumferential direction, the width (Si) of the inflow opening 33 in the circumferential direction, and the width (Sm) of the slit space 35 in the circumferential direction are all 0.8 mm. In each of the following Tables, as the shape of the transverse section of the slit 18 used in Examples and Comparative Example, when the shape shown in FIG. 7(A) is used, it is indicated in "A"; when the shape shown in FIG. 7(B) is used, it is indicated in "B"; and when the shape shown in FIG. 7(F) is used, it is indicated in "F".

The number of the slit 18 provided in the screen 9 is 24.

As shown in FIG. 7 (A), (B), and (F), in the blade 12 of the rotor 2 used in Examples and Comparative Example, the width b of the front-end part 21 of the blade in the rotation direction that is slightly larger than the width (Si) of the inflow opening 33 of the slit 18 in the circumferential direction shown in FIG. 7 (A) and (B) of Examples is used. More specifically, in the blade 12 of the rotor 2 used in Examples and Comparative Example, the width b of the front-end part 21 thereof in the rotation direction is 2.5 mm.

Here, the width (Si) of the inflow opening 33 of the slit 18 in the circumferential direction, the width (So) of the outflow opening 34 of the slit 18 in the circumferential direction, and the width (Sm) of the slit space 35 in the circumferential direction are the length in the each of the circumferential direction (in other words, the direction perpendicular to the axial direction of the rotation axis of the rotor 2) in the same position where the front-end part 21 of the blade 12 and the slit 18 are overlapped with each other in the longitude direction of the slit 18.

Measurement of Particle Size Distribution

In Examples, the particle size distribution was measured by using MT-3300 (manufactured by Nikkiso Co., Ltd.). Pure water was used as the measurement solvent, the particle refractive index was 1.81, and the solvent refractive index was 1.33. As for the result, the result of the volume distribution was used.

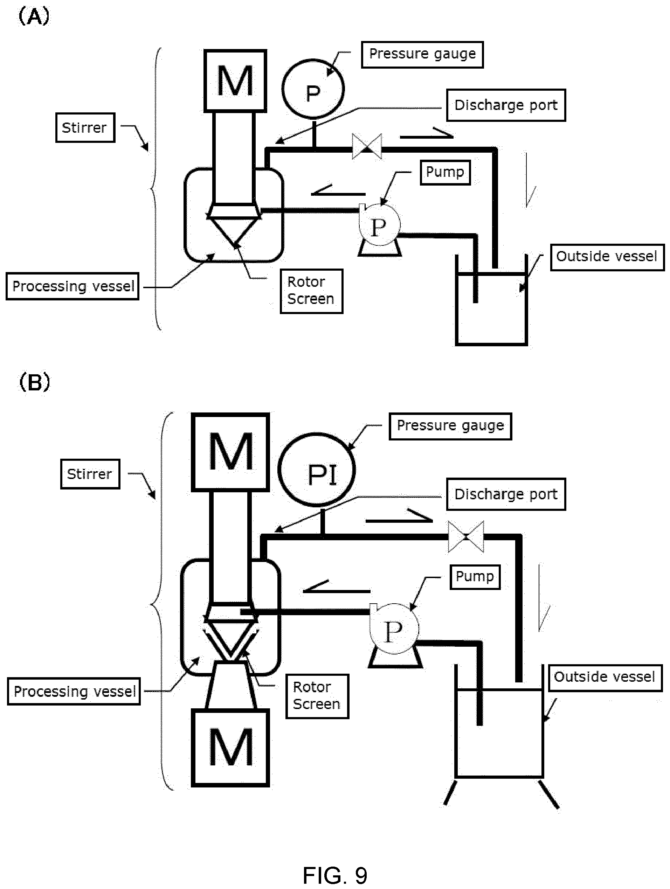

As Example 1, by using the stirrer according to the first embodiment of the present invention (FIG. 1 and FIG. 2), an emulsification experiment of liquid paraffin and pure water was carried out with the test apparatus shown in FIG. 9(A). Prescription used in the emulsification experiment was liquid paraffin at 29.4% by weight of, pure water at 68.6% by weight, and a mixture of Tween 80 at 1.33% by weight and Span 80 at 0.67% by weight as emulsifier. The fluid to be processed, which was formulated as described above, was used as preliminary mixed product, and the preliminary mixed product in an outside vessel was introduced into processing vessel 4 in which the stirrer of the present invention was laid by a pump in the test apparatus shown in Fig. 9(A), the inside of the processing vessel 4 was sealed with liquid, and by introducing the fluid to be processed into the processing vessel 4 by the pump, the fluid to be processed was discharged from the discharge port, then the fluid to be processed was discharged from screen to carry out the emulsification process by rotating the rotor 2 of the stirrer of the present application at 356.7 (rotation/ second) while circulating the fluid to be processed between the processing vessel 4 and the outside vessel at 2500 g/minute.

The number of the blade 12 (4 or 6) and the shape of the transverse section (cross-section that is perpendicular to the rotation axis 13 in the axial direction) of the slit 18 were changed, and the value of the average particle diameter (D50) and the coefficient of variation (C.V.) of the particle diameter in the measurement result of the particle size distribution of the emulsified particles obtained after 20 minutes from the start of the emulsification process is shown in Table 1.

The coefficient of variation of the particle diameter is an index showing a degree of uniformity of the obtained particles and is obtained from the average particle diameter (D50) and the standard deviation in the particle size distribution of the particle by using the equation: Coefficient of Variation (C.V.) (%) =Standard Deviation ÷ Average Particle Diameter (D50)×100. When the value of the coefficient of variation is smaller, the particle size distribution of the obtained particles is smaller, and uniformity as the particle is higher.

Here, the peripheral velocity V of the rotation of the rotor 2 is V=D×π×N, when the maximum outer diameter of the rotor in the same position where the front-end part 21 of the blade 12 and the slit 18 are overlapped with each other in the longitude direction of the slit 18 is set to D (m) and the rotation number of the rotor is set to N (rotations/second). The rotor diameter D described in Table 1 to Table 8, Table 11 is the maximum outer diameter of the rotor 2 at the same position.

As can be seen in Table 1, when the width (So) of the outflow opening 34 of the slit 18 in the circumferential direction and the width (Si) of the inflow opening 33 thereof in the circumferential direction were provided so as to be larger than the width (Sm) of the slit space in the circumferential direction on the condition that the peripheral velocity of rotation of the rotor 2 is 33.6 (m/second), it was found that the average particle diameter (D50) and the value of C.V. became smaller as well as that the emulsified particles having the fine particle diameter and the narrow particle size distribution could be obtained.

As for Example 2, the result obtained in the same manner as in Example 1 is shown in Table 2 except that the rotation number of the rotor 2 is 333.3 (rotations/second), and the peripheral velocity of rotation of the rotor 2 is V=31.4 (m/second).

As for Example 3, the result obtained in the same manner as in Example 1 is shown in Table 3 except that the number of the blades in the rotor 2 is 6, the rotation number of the rotor 2 is 300 (rotations/second), and the peripheral velocity of the rotation is V=28.3 (m/second).

As for Example 4, the result obtained in the same manner as in Example 1 is shown in Table 4 except that the number of the blades in the rotor 2 is 6, the rotation number of the rotor 2 is 250 (rotations/second), and the peripheral velocity of the rotation is V=23.6 (m/second).

As for Comparative Example 1, emulsification processing was carried out in the same manner as Example 1 except that the shape of the transverse section of the slit 18 provided on the screen 9 is the conventional type (Si=So=Sm) as shown in FIG. 7(F). The result thereof is shown in Table 5.

As for Comparative Example 2, emulsification processing was carried out in the same manner as Example 2 except that the shape of the transverse section of the slit 18 provided on the screen 9 is the conventional type (Si=So=Sm) as shown in FIG. 7(F). The result thereof is shown in Table 6.

As for Comparative Example 3, emulsification processing was carried out in the same manner as Example 3 except that the shape of the transverse section of the slit 18 provided on the screen 9 is the conventional type (Si=So=Sm) as shown in FIG. 7(F). The result thereof is shown in Table 7.

As for Comparative Example 4, emulsification processing was carried out in the same manner as Example 4 except that the shape of the transverse section of the slit 18 provided on the screen 9 is the conventional type (Si=So=Sm) as shown in FIG. 7(F). The result thereof is shown in Table 8.

In Example 1 and Comparative Example 1, the state of the inside of the slit 18 (hereinafter, inside of the slit) after 36 hours of continuous operation of the stirrer was visually confirmed to judge the state of erosion. The state where the erosion clearly occurred is indicated as "x", the state where mirror surface become clouded state is indicated as "Δ", and the state where the inside of the slit did not change before and after 36 hours of the operation and no erosion occurred is indicated "O". They are shown in Table 1 and Table 5.

Based of the above results, it was found that by providing the width (So) of the outflow opening 34 of the slit 18 in the circumferential direction and the width (Si) of the inflow opening 33 thereof in the circumferential direction so as to be larger than the width (Sm) of the slit space in the circumferential direction, the average particle diameter (D50) became clearly smaller, and that the C.V. value which is the index of variation of the particle diameter became smaller, as compared with those of the conventional type of the slit (Si=So=Sm). It was also found that the occurrence of erosion due to cavitation could be prevented. Further, in Comparative Examples 1 to 4, the slit 18 of the screen 9 having the shape of the cross-section is used as shown in FIG. 7 (F), but, comparing to Comparative Example 2, in comparative Example 1 in which the rotor 2 rotates at a higher speed than that of Comparative Example 2, the values of the average particle diameter (D50) and of C.V. are both deteriorated. It is considered that this is because of the result of generation of hollowing phenomenon due to the cavitation.

Table 1

| Rotation number N=356.7 [rotations/second]; Rotor diameter D=0.030 [m];<br>Peripheral velocity V=33.6 [m/second] | | | | | |
|---|---|---|---|---|---|
| Temperature of processing vessel: 20°C<br>Pressure of processing vessel: 0.00 MPaG | | | Shape of transverse section of slit | | |
| | | | A | B | |
| | | | A | B | |
| Number of blade (sheet) | 4 | Average particle diameter [μm]/C.V. value [%] after 20 minutes | 1.84/23. 1 | 1.81/22. 2 | |
| | 6 | | 1.79/22. 9 | 1.70/21. 7 | |
| State of erosion inside slit (after operation of 36 hours) | | | ○ | ○ | |

Table 2

| Rotation number N=333.3 [rotations/second]; Rotor diameter D=0.030 [m];<br>Peripheral velocity V=31.4 [m/second] | | | | | |
|---|---|---|---|---|---|
| Temperature of processing vessel: 20°C<br>Pressure of processing vessel: 0.00 MPaG | | | Shape of transverse section of slit | | |
| | | | A | B | |
| Number of blade (sheet) | 4 | Average particle diameter [μm]/C.V. value [%] after 20 minutes | 2.08/25. 4 | 1.98/23 .8 | |
| | 6 | | 2.01/24. 3 | 1.94/23 .0 | |

Table 3

| Rotation number N=300 [rotations/second]; Rotor diameter D=0.030 [m]; Peripheral velocity V=28.3 [m/second] | | | | |
|---|---|---|---|---|
| Temperature of processing vessel: 20°C<br>Pressure of processing vessel: 0.00 MPaG | | | Shape of transverse section of slit | |
| | | | A | B |
| Number of blade (sheet) | 6 | Average particle diameter [μm]/ C.V. value [%] after 20 minutes | 2.85/34. 6 | 2.53/32. 7 |

Table 4

| Rotation number N=250 [rotations/second]; Rotor diameter D=0.030 [m];<br>Peripheral velocity V=23.6 [m/second] | | | | |
|---|---|---|---|---|
| Temperature of processing vessel: 20°C<br>Pressure of processing vessel: 0.00 MPaG | | | Shape of transverse section of slit | |
| | | | A | B |
| Number of blade (sheet) | 6 | Average particle diameter [μm]/ C.V. value [%] after 20 minutes | 4.75/43 .3 | 4.29/39. 9 |

Table 5

| Rotation number N=356.7 [rotations/second]; Rotor diameter D=0.030 [m]; Peripheral velocity V=33.6 [m/second] | | | |
|---|---|---|---|
| Temperature of processing vessel: 20°C | | | Shape of transverse section of slit |
| Pressure of processing vessel: 0.00 MPaG | | | F |
| Number of blade (sheet) | 4 | Average particle diameter [$\mu$m]/C.V. value [%] after 20 minutes | 3.65/53.8 |
| | 6 | | 3.59/52.8 |
| State of erosion inside slit (after operation of 36 hours) | | | x |

Table 6

| Rotation number N=333.3 [rotations/second]; Rotor diameter D=0.030 [m]; Peripheral velocity V=31.4 [m/second] | | | |
|---|---|---|---|
| Temperature of processing vessel: 20°C | | | Shape of transverse section of slit |
| Pressure of processing vessel: 0.00 MPaG | | | F |
| Number of blade (sheet ) | 4 | Average particle diameter [$\mu$m]/C.V. value [%] after 20 minutes | 2.66/31.0 |
| | 6 | | 2.51/30.1 |

Table 7

| Rotation number N=300 [rotations/second]; Rotor diameter D=0.030 [m]; Peripheral velocity V=28.3 [m/second] | | | |
|---|---|---|---|
| Temperature of processing vessel: 20°C | | | Shape of transverse section of slit |
| Pressure of processing vessel: 0.00 MPaG | | | F |
| Number of blade (sheet ) | 6 | Average particle diameter [$\mu$m]/C.V. value [%] after 20 minutes | 3.39/48.3 |

Table 8

| Rotation number N=250 [rotations/second]; Rotor diameter D=0.030 [m]; Peripheral velocity V=23.6 [m/second] | | | |
|---|---|---|---|
| Temperature of processing vessel: 20°C | | | Shape of transverse section of slit |
| Pressure of processing vessel: 0.00 MPaG | | | F |
| Number of blade (sheet) | 6 | Average particle diameter [$\mu$m]/C.V. value [%] after 20 minutes | 5.71/55.7 |

Contrary to Examples 1 to 4 and Comparative Examples 1 to 4, Examples 5 and 6 describes that not only the rotor 2 was rotated, but also the screen 9 was rotated in the direction opposite to the rotation of the rotor 2. Namely, this describes the Example according to the second embodiment in the present invention (see FIG. 5). Here, the test apparatus shown in FIG. 9(B) was used. The prescription, the circulation flow amount, and the circulation method are the same as those of Examples 1 to 4. As the shape of the transverse section of the slit 18 provided on the screen 9, the shape shown in FIG. 7(b) was used.

As for Example 5, the result when the number of the blade of the rotor 2 was set to 4, the relative rotation number of the rotor 2 and the screen 9 was set to N=633 (rotations/second), and the relative peripheral velocity was set to V=69.6 m/second is shown in Table 9.

As for Example 6, the result when the number of the blade of the rotor 2 was set to 4, the relative rotation number of the rotor 2 and the screen 9 was set to N=500 (rotations/second), and the relative peripheral velocity was set to V=55.0 m/second is shown in Table 10.

Here, the peripheral velocity V (m/second) of the rotation of the rotor 2 to the screen 9 is $V=D\times\pi\times N$ (here, $N=N1+N2$), when the maximum outer diameter of the rotor in the same position is set to D (m), the rotation number of the rotor is set to N1, the rotation number of the screen is set to N2, and the relative rotation number of the rotor and the screen is set to N (rotations/second). The rotor diameter D described in Table 9 to Table 10 is the maximum outer diameter.

As for Comparative Example 5, emulsification processing was carried out in the same manner as Example 5 except that the shape of the transverse section of the slit 18 provided on the screen 9 is the conventional type (Si=So=Sm) as shown in FIG. 7(F). The result thereof is shown in Table 9.

As for Comparative Example 6, emulsification processing was carried out in the same manner as Example 6 except that the shape of the transverse section of the slit 18 provided on the screen 9 is the conventional type (Si=So=Sm) as shown in FIG. 7(F). The result thereof is shown in Table 10.

In Example 5 and Comparative Example 5, the state of the inside of the slit after 24 hours of continuous operation of the stirrer was visually confirmed to judge the state of erosion. The state where the erosion clearly occurred is indicated as "x", the state where mirror surface become clouded state is indicated as "Δ", and the state where the inside of the slit did not change before and after 24 hours of the operation and no erosion occurred is indicated "○". They are shown in Table 9.

From the results of the above, it was founded that by providing the width (Si) of the inflow opening 34 of the slit in the circumferential direction and the width (So) of the outflow opening 34 thereof 18 in the circumferential direction so as to be larger than the width (Sm) of the slit space in the circumferential direction, the average particle diameter (D50) of the slit 18 became clearly smaller than that of the conventional type (Si=So=Sm), and further the C.V. value which is the index of variation of the particle diameter, became smaller. It was also found that the occurrence of erosion due to cavitation could be prevented.

Table 9

| Rotation number N=633 [rotations/second]; Rotor diameter D=0.035 [m]; Peripheral velocity V=69.6 [m/second] | | | | |
|---|---|---|---|---|
| Temperature of processing vessel: 40°C | | | Example 5 | Comparative Example 5 |
| Pressure of processing vessel: 0.00 MPaG | | | Shape of transverse section of slit: B | Shape of transverse section of slit: F |
| Number of blade (sheet) | 4 | Average particle diameter [μm] /C.V. value [%] after 20 minutes | 0.48/12.4 | 0.91/24.8 |
| State of erosion inside slit (after 24 hours of operation) | | | ○ | x |

Table 10

| Rotation number N=500 [rotations/second]; Rotor diameter D=0.035 [m]; Peripheral velocity V=55.0 [m/second] | | | | |
|---|---|---|---|---|
| Temperature of processing vessel: 40°C | | | Example 6 | Comparative Example 6 |
| Pressure of processing vessel: 0.00 MPaG | | | Shape of transverse section of slit: B | Shape of transverse section of slit: F |
| Number of blade (sheet) | 4 | Average particle diameter [μm] /C.V. value [%] after 20 minutes | 0.89/23.9 | 1.37/27.8 |

Dispersion process of Pigments

As Example 7, by using the stirrer according to the first embodiment of the present invention (FIG. 1 and FIG. 2), dispersion process of pigments was carried out with the test apparatus shown in FIG. 9(A).

Prescription for the material to be processed was 5% by weight of red pigment (C. I. Pigment Red 254) with the primary particle diameter of 10 to 35 nm, 5% by weight of BYK-2000 (manufactured by BYK Chemie GmbH) as a dispersing agent, and 90% by weight of a mixed solution of propylene glycol monomethyl ether acetate (PGMEA) and propylene glycol monomethyl ether (PGME) (PGMEA/PGME=4/1: volume ratio). The material to be processed as the fluid to be processed, which was formulated as described above, was used as preliminary mixed product, and the preliminary mixed product in the outside vessel was introduced into processing vessel 4 having the stirrer of the present invention by the pump in the test apparatus shown in Fig. 9(A), the inside of the processing vessel 4 was sealed with liquid, and by introducing the fluid to be processed into the processing vessel 4 by the pump, the fluid to be processed was discharged from the discharge port, then the fluid to be processed was discharged from screen to carry out the emulsification process by rotating the rotor 2 of the stirrer of the present application at 333.33 (rotation/ second) while circulating the fluid to be processed between the processing vessel 4 and the outside vessel at 2300 g/minute. As the shape of the transverse section of the slit formed in the screen, the shape shown in FIG. 7(B) was used. The value of the average particle diameter (D50) and the coefficient of variation (C.V.) of the particle diameter in the measurement result of the particle size distribution of the pigment microparticles obtained after 45 minutes from the start of the dispersion process is shown in Table 11.

As for Comparative Example 7, emulsification processing was carried out in the same manner as Example 7 except that the shape of the transverse section of the slit provided on the screen is the conventional type (Si=So=Sm) as shown in FIG. 7(F).

In Example 7 and Comparative Example 7, the state of the inside of the slit after 24 hours of continuous operation of the stirrer was visually confirmed to judge the state of erosion. The state where the erosion clearly occurred is indicated as "x", the state where mirror surface become clouded state is indicated as "Δ", and the state where the inside of the slit did not change before and after 24 hours of the operation and no erosion occurred is indicated "○". They are shown in Table 11.

From the results of the above, it was founded that by providing the width (So) of the outflow opening of the slit in the circumferential direction and the width (Si) of the inflow opening 33 thereof in the circumferential direction so as to be larger than the width (Sm) of the slit space 35 in the circumferential direction, the average particle diameter (D50) of the slit became clearly smaller than that of the conventional type (Si=So=Sm), and further the C.V. value which is the index of variation of the particle diameter became smaller. It was also found that the occurrence of erosion due to cavitation could be prevented.

Table 11

| Rotation number N=333.3 [rotations/second]; Rotor diameter D=0.030 [m]; Peripheral velocity V=31.4 [m/second] | | | | |
|---|---|---|---|---|
| Temperature of processing vessel: 25°C | | | Example 7 | Comparative Example 7 |
| Pressure of processing vessel: 0.05 MPaG | | | Shape of transverse section of slit: B | Shape of transverse section of slit: F |
| Number of blade (sheet) | 6 | Average particle diameter [nm]/C.V. value [%] after 45 minutes | 22.3/21.3 | 43.1/38.5 |
| State of erosion inside slit (after operation of 24 hours) | | | ○ | Δ |

Reference Numerals

1  Processing member
2  Rotor
3  Support tube
4  Storing vessel
5  Suction part
6  Suction room
7  Stirring room
9  Screen
10  Partition wall
11  Opening
12  Blade
13  Rotation axis
14  Motor

| 15 | Stirring blade |
|----|----------------|
| 18 | Slit |
| 19 | Screen member |
| 20 | Second motor |
| 21 | Front-end part |
| 22 | Inflow-side region |
| 23 | Outflow-side region |
| 24 | Intermediate region |
| 26 | Inflow-side end surface in the front side |
| 27 | Outflow-side end surface in the front side |
| 28 | Intermediate end surface in the front side |
| 30 | Inflow-side end surface in the rear side |
| 31 | Outflow-side end surface in the rear side |
| 32 | Intermediate end surface in the rear side |
| 33 | Inflow opening |
| 34 | Outflow opening |
| 35 | Slit space |
| 36 | Potential core |
| Si | Width of inflow opening in circumferential direction |
| So | Width of outflow opening in circumferential direction |
| Sm | Width of slit space in circumferential direction |

**Claims**

1. A stirrer which comprises:

   a rotor having a plurality of blades and rotating, a partition wall for the purpose of holding a discharge pressure of the rotor, and a screen laid around the rotor, all of which are provided concentrically,
   the screen comprises a plurality of slits in a circumferential direction thereof and a screen member located between the adjacent slits, and
   in the stirrer in which, of the rotor and the screen, by rotating at least the rotor, a fluid to be processed is discharged as an intermittent jet flow from an inside to an outside of the screen through the slit, wherein
   the screen forms a cylindrical shape having a circular cross-section, and
   an opening of the plurality of slits provided on an inner wall surface of the screen is made to serve as an inflow opening, and an opening of the plurality of slits provided on an outer wall surface of the screen is made to serve as an outflow opening, and a space between the inflow opening and the outflow opening is made to serve as a slit space, wherein
   a width (So) of the outflow opening in the circumferential direction and a width (Si) of the inflow opening in the circumferential direction is set so as to be larger than a width (Sm) of the slit space in the circumferential direction.

2. The stirrer according to claim 1, wherein

   the plurality of the slits includes at least an inflow-side region where the fluid to be processed flows into the slit from an inner side of the screen and an outflow-side region where the fluid to be processed flows out from the slit to an outside of the screen, and
   the inflow-side region is defined by an inflow-side end surface in a front side and an inflow-side end surface in a rear side, which are arranged with a distance in a rotation direction of the plurality of the blades, and the outflow-side region is defined by an outflow-side end surface in the front side and an outflow-side end surface in the rear side, which are arranged with a distance in the rotation direction of the blades, wherein
   the width (Sm) of the slit space in the circumferential direction is a width of the narrowest narrow part of the slit space in the circumferential direction; and angle of at least one of the following (1) to (4) is in the range of 1 degree to 45 degrees:

      (1) an angle of the inflow-side end surface in the front side against a radius passing through a center of the narrow part in the circumferential direction,
      (2) an angle of the outflow-side end surface in the rear side against a radius passing through a center of the narrow part in the circumferential direction,

(3) an angle of the inflow-side end surface in the rear side against a radius passing through a center of the narrow part in the circumferential direction, and
(4) an angle of the outflow-side end surface in the front side against a radius passing through a center of the narrow part in the circumferential direction.

3. The stirrer according to claim 2, wherein
the plurality of the slits is provided with an intermediate region formed between the inflow-side region and the outflow-side region, the intermediate region is defined by an intermediate end surface in the front side and an intermediate end surface in the rear side, which are arranged with a distance in the rotation direction of the plurality of the blades, and the intermediate end surface in the front side and the intermediate end surface in the rear side have a width in a radial direction.

4. The stirrer according to any one of claims 1 to 3, wherein

the width (Sm) of the slit space in the circumferential direction is the width of the narrowest narrow part in the circumferential direction among the width of the slit space in the circumferential direction; and
the width of the slit in the circumferential direction is gradually decreased from the inflow opening toward the narrow part and is gradually increased from the narrow part toward the outflow opening.

5. The stirrer according to any one of claims 1 to 4, wherein the width (So) of the outflow opening in the circumferential direction is in the range of 1.0 mm to 8.0 mm.

6. The stirrer according to any one of claims 1 to 5, wherein diameters of the blade and of the screen are decreased as departing in an axial direction from an introduction port through which the fluid to be produced is introduced into the screen.

7. The stirrer according to any one of claims 1 to 6, wherein

the plurality of the slits has the same width in the circumferential direction and are formed with an equal distance in the circumferential direction, and
the screen does not rotate.

8. The stirrer according to any one of claims 1 to 6, wherein

the plurality of the slits has the same width in the circumferential direction and are formed with an equal distance in the circumferential direction, and
the screen rotates in a direction opposite to the rotor.

9. The stirrer according to any one of claims 1 to 8, wherein
a width (v) of the plurality of the slits in the screen in the radial direction thereof is defined by the following formula (1), when D is a maximum outer diameter of the rotor.

$$0.02 \times D \leq v \leq 0.15 \times D \qquad (1)$$

EP 3 957 392 A1

FIG. 1

23

FIG. 2

FIG. 3

FIG. 4

FIG. 5

FIG. 6

FIG. 7

(A)  (B)  (C)

(D)  (E)  (F)

FIG. 8

(A)

(B)

FIG. 9

## INTERNATIONAL SEARCH REPORT

| | International application No. |
|---|---|
| | PCT/JP2019/032869 |

A.   CLASSIFICATION OF SUBJECT MATTER
Int. Cl. B01F7/16(2006.01)i, B01F7/24(2006.01)i

According to International Patent Classification (IPC) or to both national classification and IPC
B.   FIELDS SEARCHED

Minimum documentation searched (classification system followed by classification symbols)
Int. Cl. B01F7/16, B01F7/24

Documentation searched other than minimum documentation to the extent that such documents are included in the fields searched
Published examined utility model applications of Japan    1922-1996
Published unexamined utility model applications of Japan  1971-2019
Registered utility model specifications of Japan          1996-2019
Published registered utility model applications of Japan  1994-2019

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
|---|---|---|
| A | WO 2016/152895 A1 (M. TECHNIQUE CO., LTD.) 29 September 2016, claims 1-6, paragraphs [0001], [0008]-[0015], [0017]-[0031], [0033]-[0058], fig. 1-8 & US 2018/0056255 A1, claims 1-15, paragraphs [0001], [0010]-[0017], [0021]-[0045], [0057]-[0098], fig. 1-8 & EP 3275534 A1 & CN 107427794 A & KR 10-2017-0129723 A | 1-9 |
| A | WO 2014/010094 A1 (M. TECHNIQUE CO., LTD.) 16 January 2014, claims 1, 3-5, 7, paragraphs [0001], [0018]-[0024], [0026]-[0050], fig. 1-10 & JP 5147091 B1 & US 2015/0321154 A1, claims 1, 3-5, 7-11, paragraphs [0001], [0024]-[0052], [0092]-[0128], fig. 1-10 & EP 2873453 A1 & CN 104411392 A & KR 10-2015-0028771 A | 1-9 |

☒  Further documents are listed in the continuation of Box C.    ☐  See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 07.11.2019 | 19.11.2019 |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

32

**INTERNATIONAL SEARCH REPORT**

| International application No. |
| --- |
| PCT/JP2019/032869 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | FR 2679789 A1 (OUEST ENROBES MODERNES) 05 February 1993, claims 1-3, page 3, line 3 to page 5, line 26, all drawings (Family: none) | 1-9 |
| A | JP 2015-85290 A (M. TECHNIQUE CO., LTD.) 07 May 2015, claims 1-2, 6, paragraphs [0001], [0020], [0021], [0028], [0030], [0035]-[0063], fig. 1-13 (Family: none) | 1-9 |
| A | JP 4-114725 A (M. TECHNIQUE CO., LTD.) 15 April 1992, claim 1, page 1, lower left column, line 20 to lower right column, line 1, page 2, lower left column, line 4 to page 7, upper right column, line 7, fig. 1-9 (Family: none) | 1-9 |
| A | JP 7-96167 A (MATSUMOTO YUSHI-SEIYAKU CO., LTD) 11 April 1995, claims 1, 6, paragraphs [0004]-[0020], fig. 1-4 (Family: none) | 1-9 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2813673 B
- JP 3123556 B
- JP 5147091 B
- WO 2016152895 A
- WO 2015093209 A
- JP H0515937 U
- FR 2679789